# EUROPÄISCHE PATENTSCHRIFT

(11) **EP 3 255 714 B1**
(45) Veröffentlichungstag und Bekanntmachung des Hinweises auf die Patenterteilung: **31.07.2019**
(21) Anmeldenummer: 16173302.7
(22) Anmeldetag: 07.06.2016
(51) Int. Cl.: H01M 10/04, H01M 10/0525, H01M 10/0587, H01M 4/04, H01M 4/38, H01M 4/62

(54) **ELEKTROCHEMISCHE ZELLEN MIT LITHIUM-DEPOT, VERFAHREN ZUR BEREITSTELLUNG SOLCHER ZELLEN UND BATTERIE MIT SOLCHEN ZELLEN**
ELECTROCHEMICAL CELLS WITH LITHIUM DEPOT, METHOD FOR THE PREPARATION OF SUCH CELLS AND BATTERY WITH SUCH CELLS
CELLULES ELECTROCHIMIQUES A DEPOT DE LITHIUM, PROCEDE DE PREPARATION DE TELLES CELLULES ET BATTERIE LES COMPRENANT

(43) Veröffentlichungstag der Anmeldung: 13.12.2017
(73) Patentinhaber: VARTA Microbattery GmbH, 73479 Ellwangen (DE)
(72) Erfinder: Fischer, Claus-Christian, 73479 Ellwangen (DE); Hald, Rainer, 73479 Ellwangen (DE); Kilibarda, Goran, 73525 Schwäbisch Gmünd (DE); Kreidler, Bernd, 73479 Ellwangen (DE)
(74) Vertreter: Patentanwaltskanzlei Cartagena

(56) Entgegenhaltungen:
- US-A1- 2007 202 365
- US-A1- 2013 149 560

## Beschreibung

Die nachfolgend beschriebene Erfindung betrifft sekundäre elektrochemische Zellen mit einer positiven Elektrode, die Lithium reversibel ein- und auszulagern vermag, und einer negativen Elektrode, die Lithium reversibel ein- und auszulagern vermag, ein Verfahren zur Bereitstellung solcher Zellen sowie Batterien mit solchen Zellen.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Ursprünglich wurden mehrere in Serie geschaltete elektrochemische Zellen in einem Gehäuse als Batterie bezeichnet. Heute werden jedoch häufig auch einzelne elektrochemische Zellen als Batterie bezeichnet.

Unter den sekundären elektrochemischen Zellen werden vergleichsweise hohe Energiedichten von Lithium-Ionen-Zellen erreicht. Diese Zellen weisen in der Regel sogenannte Kompositelektroden auf, die neben elektrochemisch aktiven Komponenten auch elektrochemisch inaktive Komponenten umfassen. Als elektrochemisch aktive Komponenten (oft auch als Aktivmaterialien bezeichnet) für Lithium-lonen-Zellen kommen grundsätzlich sämtliche Materialien in Frage, die Lithium-Ionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumcobaltoxid (LiCoO₂), LiMn₂O₄-Spinell (LiMn₂O₄), Lithiumeisenphosphat (LiFePO₄) sowie Derivate wie beispielsweise LiNi_{1/3}Mn_{1/3}Co_{1/3}O₂ oder LiMnPO₄. Sämtliche elektrochemisch aktiven Materialien sind in der Regel in Partikelform in den Elektroden enthalten.

Als elektrochemisch inaktive Komponenten sind an erster Stelle Elektrodenbinder und Stromableiter zu nennen. Über Stromableiter werden Elektronen den Elektroden zu- oder aus ihnen abgeführt. Elektrodenbinder sorgen für die mechanische Stabilität der Elektroden sowie für die Kontaktierung der Partikel aus elektrochemisch aktivem Material untereinander und zum Stromableiter. Zu einer verbesserten elektrischen Anbindung der elektrochemisch aktiven Partikel an den Stromableiter können leitfähigkeitsverbessernde Additive beitragen, die ebenfalls unter den Sammelbegriff "elektrochemisch inaktive Komponenten" zu subsumieren sind. Sämtliche elektrochemisch inaktiven Komponenten sollten zumindest im Potentialbereich der jeweiligen Elektrode elektrochemisch stabil sein und einen chemisch inerten Charakter gegenüber gängigen Elektrolytlösungen aufweisen. Gängige Elektrolytlösungen sind z.B. Lösungen von Lithiumsalzen wie Lithiumhexafluorophosphat (LiPF6) in organischen Lösungsmitteln wie Ether und Ester der Kohlensäure.

Die genannten Aktivmaterialien für negative Elektroden auf Kohlenstoffbasis ermöglichen reversible spezifische Kapazitäten von bis zu ca. 372 Ah/kg. Eine noch deutlich höhere Speicherfähigkeit von bis zu 4200 Ah/kg weisen die erwähnten mit Lithium legierbaren metallischen und halbmetallischen Materialien auf. Die Kapazitäten der genannten Kathodenmaterialien liegen dagegen nur im Bereich zwischen 110 Ah/kg und 250 Ah/kg. Man versucht daher, die Materialien für die positive und für die negative Elektrode mengenmäßig auszubalancieren, um die faktischen Kapazitäten der Elektroden möglichst optimal aufeinander abzustimmen.

Von besonderer Bedeutung ist in diesem Zusammenhang, dass es bereits beim ersten Lade-/Entladezyklus von sekundären Lithium-Ionen-Zellen (der sogenannten Formierung) zur Ausbildung einer Deckschicht auf der Oberfläche der elektrochemisch aktiven Materialien in der Anode kommt. Diese Deckschicht wird als "Solid Elektrolyte Interphase" (SEI) bezeichnet und besteht in der Regel vor allem aus Elektrolytzersetzungsprodukten sowie einer gewissen Menge an Lithium. Dieses Lithium ist in der SEI fest gebunden. Damit verringert sich der Anteil an Lithium, das noch für Ein- und Auslagerungsvorgänge bzw. für Lade- und Entladereaktionen zur Verfügung steht (Lithium, das in einer Lithium-lonen-Zelle noch für Ein- und Auslagerungsvorgänge bzw. für Lade- und Entladereaktionen zur Verfügung steht, wird nachfolgend auch als "mobiles Lithium" bezeichnet).

Die SEI ist im Idealfall nur noch für die extrem kleinen Lithium-Ionen permeabel und unterbindet einen weiteren direkten Kontakt der Elektrolytlösung mit dem elektrochemisch aktiven Material in der Anode. Insoweit resultieren aus der Bildung der SEI durchaus positive Effekte. Nachteilig wirken sich allerdings die erwähnten Verluste an Lithium durch eben diese SEI-Bildung aus. Üblicherweise kommt es im Rahmen des ersten Lade- und Entladezyklus, abhängig von der Art und der Qualität des verwendeten Aktivmaterials und der verwendeten Elektrolytlösung, zu einem Verlust von etwa 10 % bis 35 % des mobilen Lithiums. Um diese Prozentzahl sinkt auch die erzielbare Kapazität. Diese Formierungsverluste mussten herkömmlich bei der Ausbalancierung von Anode und Kathode berücksichtigt werden.

In Folgezyklen kommt es in der Regel jeweils nur noch zu geringfügigen Verlusten an mobilem Lithium. Über eine höhere Zyklenzahl summieren sich diese geringfügigen Verluste jedoch zu einem wichtigen, eventuell sogar zu dem wichtigsten Parameter für Zellalterung auf. Die Dicke der SEI-Schicht auf der Oberfläche der elektrochemisch aktiven Materialien nimmt immer mehr zu, was häufig einen deutlichen Anstieg der Zellimpedanz zur Folge hat. Hinzu kommen die immer größeren Verluste an mobilem Lithium. Diese Effekte führen zu einer kontinuierlich fortschreitenden Kapazitäts- und Leistungsabnahme der betroffenen Zelle. Die Zelle altert.

Aus der US 2013/149560 A1 ist eine Lithium-Zelle bekannt, die eine Hilfselektrode aufweist, welche dazu dienen kann, Lithium-Verluste bei der Formation der Zelle auszugleichen. Bei der Hilfselektrode kann es sich um einen einfachen Lithiumpatch handeln oder aber um eine Lithium-Legierung, beispielsweise eine Lithium-Aluminium-Legierung. Die Hilfselektrode ist dabei stets mit der negativen Elektrode der Lithium-Zelle gekoppelt.

Aus der WO 2012/065909 A1 ist es bekannt, Lithium-Ionen-Zellen mit einem Lithium-Depot, also einer Menge an zusätzlichem Lithium, zu versehen, mit dem die Verluste an mobilem Lithium während der SEI-Bildung und auch in Folgezyklen erfolgreich abgefedert werden können.

Der vorliegenden Erfindung lag die Aufgabe zugrunde, die in der WO 2012/065909 A1 beschriebene Lösung weiterzuentwickeln und Lithium-Ionen-Zellen mit verbessertem Alterungsverhalten bereitzustellen, bei denen die obigen Probleme nicht oder nur in verringertem Ausmaß auftreten.

Diese Aufgabe wird erfindungsgemäß gelöst durch eine sekundäre elektrochemische Zelle nach Anspruch 1 und ein Verfahren nach Anspruch 9. Bevorzugte Ausführungsformen der gegenwärtigen Erfindung sind in den abhängigen Ansprüchen 2-8 und 10, 11 beschrieben.

Die erfindungsgemäße sekundäre elektronische Zelle umfasst eine positive Elektrode und eine negative Elektrode. Beide Elektroden vermögen Lithium reversibel ein- und auszulagern. Weiterhin umfasst die Zelle in den Elektroden das bereits erwähnte mobile Lithium.

Der Begriff "mobiles Lithium" ist im Zusammenhang mit der vorliegenden Erfindung von großer Bedeutung, weshalb er an dieser Stelle noch einmal klar definiert werden soll. Unter "mobilem Lithium" ist im Rahmen der vorliegenden Anmeldung das Lithium in der erfindungsgemäßen Zelle zu verstehen, das für Ein- und Auslagerungsvorgänge in den Elektroden zur Verfügung steht. Wie oben erläutert, wird bei der Formierung einer sekundären Lithium-Ionen-Zelle die erwähnte SEI gebildet, die einen Teil des anfänglich in der Zelle enthaltenen Lithiums irreversibel bindet. Daneben geht auch in jedem Folgezyklus ein Teil des in der Zelle enthaltenen Lithiums durch Nebenreaktionen verloren. Der Anteil an mobilem Lithium in der Zelle sinkt also während des Betriebs der Zelle, wenn die Verluste nicht kompensiert werden.

Die erfindungsgemäße Zelle umfasst einen Elektrolyten, über den das mobile Lithium in Form von Ionen zwischen der positiven und der negativen Elektrode hin- und herwandern kann, sowie ein Gehäuse, das einen Innenraum einschließt, in dem die Elektroden und der Elektrolyt angeordnet sind.

Zusätzlich zu dem in den Elektroden enthaltenen Lithium umfasst die erfindungsgemäße Zelle ein Lithium-Depot, um Lithium-Verluste bei der Formation der Zelle und/oder im anschließenden Betrieb, also bei anschließenden Lade- und Entladezyklen, ausgleichen zu können.

Auch der Begriff "Lithium-Depot" ist im Zusammenhang mit der vorliegenden Erfindung von großer Bedeutung. Unter einem "Lithium-Depot" ist im Rahmen der vorliegenden Anmeldung ein Depot zu verstehen, das mobiles Lithium freisetzen kann, das dann anschließend für Ein- und Auslagerungsvorgänge in den Elektroden der erfindungsgemäßen Zelle zurVerfügung steht.

Erfindungsgemäß handelt es sich bei dem Lithium-Depot um eine Lithium-Legierung aus Lithium und mindestens einem Legierungspartner. Die Legierung weist einen Lithium-Anteil im Bereich von 5 Gew.-% bis 46 Gew.-%, bevorzugt im Bereich von 18 Gew.-% bis 46 Gew.-%, insbesondere im Bereich von 21 Gew-% bis 31 Gew.-%, auf.

Aus der WO 2012/065909 A1 ist es bekannt, elementares Lithium als Lithium-Depot in eine Zelle einzubringen, um Verluste an mobilem Lithium bei der SEI-Bildung bzw. in darauffolgenden Lade- und Entladezyklen auszugleichen. Nicht bekannt ist hingegen, die erwähnte Lithium-Legierung als Lithium-Depot einzusetzen. Dies hat jedoch große Vorteile.

Bei kleinen Zellen bewegen sich die Kapazitätsverluste durch die erwähnte SEI-Bildung oft nur im Bereich von einstelligen mAh-Werten. Um solch kleine Kapazitätsverluste zu kompensieren, sind sehr kleine Mengen an elementarem Lithium erforderlich. Zum Ausgleich eines Kapazitätsverlustes von 5 mAh wird beispielsweise eine Menge von lediglich 1,25 mg metallisches Lithium benötigt. Im Rahmen einer Serienproduktion ist es ausgesprochen schwierig, solch kleine Mengen an Lithium bereitzustellen und in Zellgehäuse einzudosieren.

Die Verwendung der erwähnten Lithium-Legierung schafft diesbezüglich Abhilfe. Lithium besitzt bekanntlich die kleinste Dichte der unter Standardbedingungen festen Elemente. Wird Lithium mit einem deutlich schwereren Element als Legierungspartner legiert, beispielsweise mit Aluminium, so lässt sich die für den Ausgleich des erwähnten Kapazitätsverlustes benötigte Lithiummenge in Form der Legierung deutlich einfacher bereitstellen und dosieren, da das stöchiometrische Äquivalent zu der benötigten Menge an elementarem Lithium sehr viel mehr wiegt.

Ein weiterer Vorteil: Lithium besitzt bekanntlich eine außerordentlich hohe Reaktivität gegenüber Feuchtigkeit, Sauerstoff und auch gegenüber Stickstoff. Der Umgang mit elementarem Lithium gestaltet sich daher selbst unter Trockenraumbedingungen nicht optimal. Lithium-Legierungen lassen sich im Gegensatz dazu sehr viel einfacher verarbeiten, denn die Reaktivität von Lithium-Legierungen liegt allgemein deutlich unter der von elementarem Lithium.

Das Lithium-Depot ist bevorzugt innerhalb des Gehäuses, besonders bevorzugt zwischen den Elektroden und einer Innenwand des Gehäuses oder zumindest zwischen einer der Elektroden und einer Innenwand des Gehäuses angeordnet.

In bevorzugten Ausführungsformen handelt es sich bei dem Lithium-Depot um eine Folie, einen Film, ein Netz oder ein Gitter aus der Lithium-Legierung. Weiterhin kann es bevorzugt sein, dass das Lithium-Depot pulverförmig oder in Form von Filamenten vorliegt.

In besonders bevorzugten Ausführungsformen liegt das Lithium-Depot als Schicht vor.

Das Gehäuse einer erfindungsgemäßen sekundären elektrochemischen Zelle weist bevorzugt einen positiven und einen negativen Pol auf. Bevorzugt steht der positive Pol des Gehäuses in elektrischem Kontakt mit der positiven Elektrode. Der negative Pol des Gehäuses steht bevorzugt in elektrischem Kontakt mit der negativen Elektrode.

In besonders bevorzugten Ausführungsformen ist das Lithium-Depot elektrisch mit dem positiven Pol und/oder der positiven Elektrode verbunden. Dies ermöglicht es, das Lithium in dem Lithium-Depot auf besonders einfache Art und Weise zu aktivieren. Wenn das Lithium-Depot elektrisch mit dem positiven Pol und/oder der positiven Elektrode verbunden ist, so kann eine Aktivierung durch Kurzschluss des positiven und des negativen Pols erfolgen. Hierdurch wird eine Entladung ermöglicht, bei der die negative Elektrode der erfindungsgemäßen sekundären elektrochemischen Zelle als Kathode fungiert und das Lithium-Depot die Anode darstellt. Diese Entladung lässt sich z.B. in Fällen, in denen die negative Elektrode der sekundären elektrochemischen Zelle auf einem kohlenstoffbasierten, zur reversiblen Einlagerung von Lithium befähigten Material basiert, durch folgende Gleichung darstellen:

Li_{Leg} → Li+ + e-

C₆ + Li⁺ + e⁻ → LiC₆

Nach dem teilweisen oder vollständigen Abreagieren der Legierung kann die Zelle entsprechend dem Stand der Technik formiert werden. Das überschüssige, durch die Entladung in die Zelle eingebrachte Lithium kompensiert dabei die in der Formation üblicherweise mit Lithiumverlust einhergehenden Nebenreaktionen. Hierdurch resultieren eine erhöhte Zellkapazität und eine verbesserte Lebensdauer.

Grundsätzlich ist es auch möglich, die Aktivierung des in dem Lithium-Depot enthaltenen Lithiums auch erst nach der Formation vorzunehmen.

Als Legierungspartner für das Lithium kommen grundsätzlich alle Verbindungen in Frage, die mit Lithium mischbar sind. Bevorzugt umfasst die Lithium-Legierung neben Lithium als Legierungspartner mindestens ein Metall aus einer der Gruppen 3 bis 14 des Periodensystems, besonders bevorzugt mindestens eines der Metalle aus der Gruppe mit Aluminium, Kohlenstoff, Silizium, Germanium, Scandium, Yttrium, Titan, Zirkonium, Hafnium, Bor, Gallium, Indium und Tallium. Unter den Elementen in dieser Auflistung sind wiederum Aluminium, Kohlenstoff, Silizium, Germanium als Legierungspartner besonders bevorzugt.

In besonders bevorzugten Ausführungsformen ist die Lithium-Legierung eine Lithium-Aluminium-Legierung mit einem Anteil Aluminium im Bereich von 54 Gew.-% bis 95 Gew.-%, insbesondere im Bereich von 54 Gew.-% bis 82 Gew.-%.

Die Verwendung von Legierungspartnern wie Aluminium kann sehr vorteilhafte Nebeneffekte mit sich bringen. Wenn das Lithium-Depot beispielsweise unmittelbar auf einem Bereich des positiven Pols der elektrochemischen Zelle angeordnet ist, so bleibt nach dem Abreagieren des in der Legierung enthaltenen Lithiums (z.B. im Rahmen der beschriebenen Aktivierung) der Legierungspartner, hier Aluminium, zurück. Dieses kann auf dem Pol eine passivierende Schicht ausbilden und diesen vor unerwünschter Korrosion schützen.

In einigen bevorzugten Ausführungsformen wird ein Lithium-Depot verwendet, das auf seiner Oberfläche eine Oxidschicht aufweist. Als konkretes Beispiel hierfür mag beispielsweise die bereits erwähnte Lithium-Aluminium-Legierung dienen. Im Kontakt mit Luftsauerstoff kann sich auf der Oberfläche einer solchen Legierung eine Aluminiumoxid-Schicht bilden, die das Innere des Lithium-Depots vor weiterer Reaktion mit Luftsauerstoff, Stickstoff oder Feuchtigkeit schützt. Wird ein solches Depot in die erfindungsgemäße Zelle eingebracht, so können die in die Zelle eingebrachten oxidischen Verbindungen auf der Oberfläche des Depots als Fängermaterialien für schädliche Substanzen dienen, beispielsweise für Fluorwasserstoff. Bislang wurden in Folge der Einbringung solcher oxidischer Verbindungen in die Zelle keine negativen Auswirkungen auf die Zellperformance beobachtet.

In besonders bevorzugten Ausführungsformen umfasst das Gehäuse einer erfindungsgemäßen Zelle ein metallisches Gehäusehalbteil als positiven und ein metallisches Gehäusehalbteil als negativen Pol. Das Lithium-Depot ist bevorzugt auf einer Innenseite des Gehäusehalbteils, das den positiven Pol bildet, angeordnet, und steht mit dieser in unmittelbarem Kontakt.

Die metallischen Gehäusehalbteile sind bevorzugt durch eine elektrisch isolierende Dichtung voneinander getrennt.

Bei der erfindungsgemäßen Zelle handelt es sich um eine Knopfzelle.

Das Gehäuse einer Knopfzelle umfasst in aller Regel zwei kreisrunde oder ovale, voneinander beabstandete und zueinander parallele Gehäuseböden sowie einen die Gehäuseböden verbindenden ringförmigen Gehäusemantel. Der Gehäusemantel und jeder der Gehäuseböden weisen eine in den Innenraum weisende Innenseite und eine in eine entgegengesetzte Richtung weisende Außenseite auf. In bevorzugten Ausführungsformen sind diese Merkmale auch bei der erfindungsgemäßen Zelle realisiert.

Besonders bevorzugt liegen die positive und die negative Elektrode bei einer erfindungsgemäßen Zelle in Form von Elektrodenbändern vor und bilden mit mindestens einem Separatorband einen Elektroden-Separator-Verbund. Das Gehäuse einer erfindungsgemäßen Zelle kann in einer Weiterbildung einen Stapel umfassend zwei oder mehr Lagen aus dem Elektroden-Separator-Verbund umfassen. Alternativ kann der Elektroden-Separator-Verbund auch als spiralförmiger, aus den Elektrodenbändern und dem mindestens einen Separatorband gebildeter zylindrischer Wickel vorliegen, dessen Stirnseiten von den Längsrändern der Elektrodenbänder und des mindestens einen Separatorbands gebildet werden. Wenn die erfindungsgemäße Zelle eine Knopfzelle ist, so weisen die Stirnseiten des zylindrischen Wickels bevorzugt in Richtung der zueinander parallelen Gehäuseböden.

Die positive Elektrode einer erfindungsgemäßen Zelle enthält in aller Regel eine Metallverbindung, die Lithium in Form von Ionen reversibel ein- und auszulagern vermag. Als Metallverbindung kommen für die positive Elektrode insbesondere die eingangs erwähnten, für Lithium-Ionen-Zellen bekannten Aktivmaterialien in Frage.

Die negative Elektrode einer erfindungsgemäßen Zelle enthält in aller Regel eine Kohlenstoffverbindung und/oder ein Metall, welches mit Lithium legierbar ist, und/oder ein Halbmetall, welches mit Lithium legierbar ist. Auch diesbezüglich kann auf die eingangs erwähnten, für die negative Elektrode von Lithium-Ionen-Zellen bekannten Aktivmaterialien verwiesen werden.

Der Elektrolyt einer erfindungsgemäßen Zelle umfasst mindestens ein Lithium-Salz. Hierfür kommt im Grunde jedes Lithium-Salz in Frage, das aus dem Stand der Technik für Lithium-Ionen-Zellen bekannt ist. Ein prominentes Beispiel hierfür ist Lithiumhexafluorophosphat (LiPF6). Gelöst ist das Salz in der Regel in einer Mischung aus organischen Carbonaten.

Zur Lösung obiger Aufgabe trägt weiterhin das im Folgenden beschriebene Verfahren bei.

Das Verfahren dient zur Bereitstellung einer sekundären elektrochemischen Zelle, wie sie oben beschrieben wurde, also einer Knopfzelle mit einer positiven und einer negativen Elektrode, die jeweils Lithium reversibel ein- und auszulagern vermögen, mobilem Lithium, das für die Ein- und Auslagerungsvorgänge in den Elektroden zur Verfügung steht, einen Elektrolyten, über den das mobile Lithium in Form von Ionen zwischen der positiven und der negativen Elektrode hin- und herwandern kann, und einem Gehäuse, das einen Innenraum einschließt, in dem die Elektroden und der Elektrolyt angeordnet sind.

Das Verfahren zeichnet sich gegenüber dem Stand der Technik dadurch aus, dass bei der Herstellung der Zelle im Innenraum des Gehäuses ein Lithium-Depot angeordnet wird, um Lithium-Verluste bei der Formation der Zelle und/oder im Betrieb ausgleichen zu können, und dass als Lithium-Depot eine Lithium-Legierung aus Lithium und mindestens einem Legierungspartner gewählt wird, wobei die Legierung bevorzugt einen Lithium-Anteil im Bereich von 5 Gew.-% bis 46 Gew.-% aufweist.

Die im Zusammenhang mit der erfindungsgemäßen Zelle beschriebenen bevorzugten Ausführungsformen können, soweit übertragbar, auch für das erfindungsgemäße Verfahren gelten. So wird etwa das Lithium-Depot besonders bevorzugt in Form einer dünnen Schicht zwischen den Elektroden und dem Gehäuse oder zwischen einer der Elektroden und dem Gehäuse angeordnet.

Besonders bevorzugt wird das Lithium-Depot derart in der Zelle angeordnet, dass es elektrisch mit dem positiven Pol und/oder der positiven Elektrode der Zelle verbunden ist.

In aller Regel wird die Zelle mit dem Lithium-Depot nach ihrer Herstellung formiert. In bevorzugten Ausführungsformen wird das Lithium in dem Lithium-Depot vor oder nach der Formation der Zelle teilweise oder vollständig aktiviert. Wie oben bereits erläutert, kann dies beispielsweise erfolgen, indem ein elektrisch mit dem positiven Pol und/oder der positiven Elektrode verbundenes Lithium-Depot durch Kurzschluss des positiven und des negativen Pols aktiviert wird.

Wenn sämtliches Lithium in dem Lithium-Depot aktiviert ist, so verbleibt von dem Depot lediglich der mindestens eine Legierungspartner. Die vorliegende Erfindung umfasst auch solche Zellen, die nach dem beschriebenen Verfahren bereitgestellt werden und an Stelle des Lithium-Depots Rückstände des mindestens einen Lithium-Legierungspartners aufweisen.

Jede Batterie, die mindestens eine der oben beschriebenen Zellen umfasst, ist Gegenstand der vorliegenden Erfindung. Bevorzugt umfasst die Batterie zwei oder mehr Zellen, die in Serie oder parallel zueinander geschaltet sind.

Weitere Merkmale der Erfindung ergeben sich auch aus der nun folgenden Beschreibung der Zeichnung. Die Darstellung der in dieser dargestellten bevorzugten Ausführungsform dient lediglich zur Erläuterung und zum besseren Verständnis der Erfindung und ist in keiner Weise einschränkend zu verstehen.

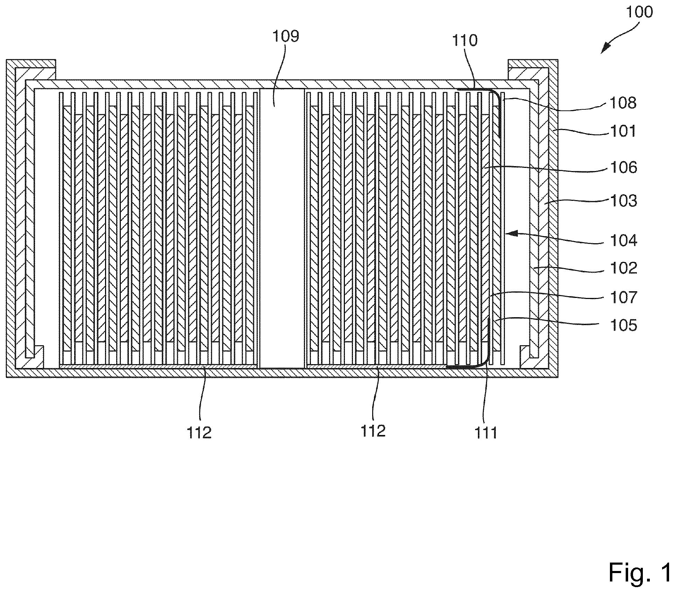

Fig. 1 zeigt ein Beispiel für eine sekundäre elektrochemische Zelle 100 gemäß der Erfindung (schematische Querschnittsdarstellung). Die Zelle 100 weist ein metallisches Gehäusehalbteil 101 als positiven und ein metallisches Gehäusehalbteil 102 als negativen Pol auf. Die beiden Gehäusehalbteile 101 und 102 sind durch eine elektrisch isolierende Dichtung 103 voneinander getrennt. Im Innenraum des Gehäuses der Zelle 100 ist ein zylindrischer Wickel 104 angeordnet. Der Wickel 104 besteht aus der bandförmigen negativen Elektrode 105, der bandförmigen positiven Elektrode 106 und den bandförmigen Separatorbändern 107 und 108. Diese sind zu einem Elektroden-Separator-Verbund mit der Sequenz negative Elektrode / Separator / positive Elektrode verarbeitet, der spiralförmig um den Wickelkern 109 gewickelt ist. Die negative Elektrode 105 ist über den metallischen Ableiter 110 mit dem metallischen Gehäusehalbteil 102 verbunden. Die positive Elektrode 106 ist über den metallischen Ableiter 111 mit dem metallischen Gehäusehalbteil 101 verbunden.

Die negative Elektrode 105 enthält als Aktivmaterial graphitischen Kohlenstoff. Die positive Elektrode 106 enthält als Aktivmaterial Lithiumcobaltoxid. Der Wickel 104 ist getränkt mit einem Elektrolyten, der ein in einer organischen Carbonatmischung gelöstes Lithium-Leitsalz umfasst.

Eine Innenseite des metallischen Gehäusehalbteils 101 ist mit einer dünnen Schicht 112 aus einer Lithium-Aluminium-Legierung (26 Gew.-% Lithium-Anteil, 74 Gew.-% Aluminium-Anteil) bedeckt. Diese Schicht liegt unmittelbar auf dem Boden des Gehäusehalbteils 101 auf. Sie ist zwischen dem Gehäusehalbteil 101 und dem Elektrodenwickel 104 angeordnet. Verbindet man das positive Gehäusehalbteil 101 elektrisch mit dem negativen Gehäusehalbteil 102, so oxidiert das in der Schicht 112 enthaltene metallische Lithium unter Freisetzung von Elektronen. Das in der Legierung enthaltene Lithium wird in mobiles Lithium umgewandelt. Die hierbei entstehenden Lithium-Ionen stehen für Ein- und Auslagerungsvorgänge in den Elektroden 105 und 106 zur Verfügung.

Wenn das metallische Lithium in der Schicht 112 vollständig abreagiert hat, so umfasst die Schicht 112 als metallische Komponente nur noch das in der Legierung enthaltene Aluminium. Das verbleibende Aluminium bildet eine Schutzschicht auf dem Boden des metallischen Gehäusehalbteils 101 und schützt dieses vor Korrosion.

## Patentansprüche

1. Sekundäre elektrochemische Zelle (100) mit den Merkmalen
a. Die Zelle umfasst eine positive Elektrode (106), die Lithium reversibel ein- und auszulagern vermag,
b. Die Zelle umfasst eine negative Elektrode (105), die Lithium reversibel ein- und auszulagern vermag,
c. Die Zelle umfasst in den Elektroden mobiles Lithium, das für Ein- und Auslagerungsvorgänge in den Elektroden zur Verfügung steht,
d. Die Zelle umfasst einen Elektrolyten, über den das mobile Lithium in Form von Ionen zwischen der positiven und der negativen Elektrode hin- und herwandern kann,
e. Die Zelle umfasst ein Gehäuse (101, 102), das einen Innenraum einschließt, in dem die Elektroden und der Elektrolyt angeordnet sind,
f. Die Zelle umfasst zusätzlich zu dem in den Elektroden enthaltenen Lithium ein Lithium-Depot (112), um Lithium-Verluste bei der Formation der Zelle und/oder im Betrieb ausgleichen zu können,
g. Die Zelle ist eine Knopfzelle, und
h. Bei dem Lithium-Depot handelt es sich um eine Lithium-Legierung aus Lithium und mindestens einem Legierungspartner, **dadurch gekennzeichnet, dass** der Lithium-Anteil der Lithium-Legierung im Bereich von 5 Gew.-% bis 46 Gew.-% liegt.

2. Zelle nach Anspruch 1 mit mindestens einem der folgenden Merkmale:
a. Das Lithium-Depot ist zwischen den Elektroden und dem Gehäuse oder zwischen einer der Elektroden und dem Gehäuse angeordnet.
b. Das Lithium-Depot ist eine Folie, ein Film, ein Netz oder ein Gitter aus der Lithium-Legierung.
c. Das Lithium-Depot liegt pulverförmig oder in Form von Filamenten vor.
d. Das Lithium-Depot liegt als Schicht vor.

3. Zelle nach Anspruch 1 oder Anspruch 2 mit mindestens einem derfolgenden Merkmale:
a. Das Gehäuse weist einen positiven und einen negativen Pol auf.
b. Der positive Pol des Gehäuses steht in elektrischem Kontakt mit der positiven Elektrode.
c. Der negative Pol des Gehäuses steht in elektrischem Kontakt mit der negativen Elektrode.
e. Das Lithium-Depot ist elektrisch mit dem positiven Pol und/oder der positiven Elektrode verbunden.

4. Zelle nach einem der vorhergehenden Ansprüche mit mindestens einem der folgenden Merkmale:
a. Die Lithium-Legierung umfasst neben Lithium mindestens eines der Metalle aus der Gruppe mit Aluminium, Kohlenstoff, Silizium, Germanium, Scandium, Yttrium, Titan, Zirkonium, Hafnium, Bor, Gallium, Indium und Tallium.
b. Die Lithium-Legierung ist eine Lithium-Aluminium-Legierung mit einem Anteil Aluminium im Bereich von 0,5 Gew.-% bis 95 Gew.-%.

5. Zelle nach einem der vorhergehenden Ansprüche, zusätzlich **gekennzeichnet durch** das folgende Merkmal:
a. Das Lithium-Depot weist auf seiner Oberfläche eine Oxidschicht auf.

6. Zelle nach einem der vorhergehenden Ansprüche mit mindestens einem der folgenden Merkmale:
a. Das Gehäuse umfasst ein metallisches Gehäusehalbteil als positiven und ein metallisches Gehäusehalbteil als negativen Pol.
b. Das Lithium-Depot ist auf einer Innenseite des Gehäusehalbteils, das den positiven Pol bildet, angeordnet, und steht mit dieser in unmittelbarem Kontakt.

7. Zelle nach einem der vorhergehenden Ansprüche mit mindestens einem der folgenden Merkmale:
a. Das Gehäuse umfasst zwei kreisrunde oder ovale, voneinander beabstandete und zueinander parallele Gehäuseböden sowie einen die Gehäuseböden verbindenden ringförmigen Gehäusemantel auf, wobei der Gehäusemantel und jeder der Gehäuseböden jeweils eine in den Innenraum weisende Innenseite und eine in eine entgegengesetzte Richtung weisende Außenseite aufweisen.
b. Die positive und die negative Elektrode liegen in Form von Elektrodenbändern vor und bilden mit mindestens einem Separatorband (107, 108) einen Elektroden-Separator-Verbund.
c. Das Gehäuse enthält einen Stapel umfassend zwei oder mehr Lagen aus dem Elektroden-Separator-Verbund.
d. Der Elektroden-Separator-Verbund liegt als spiralförmiger, aus den Elektrodenbändern und dem mindestens einen Separatorband gebildeter zylindrischer Wickel (104) vor, dessen Stirnseiten von den Längsrändern der Elektrodenbänder und des mindestens einen Separatorbands gebildet werden.
e. Die Stirnseiten des zylindrischen Wickels weisen in Richtung der zueinander parallelen Gehäuseböden.

8. Zelle nach einem der vorhergehenden Ansprüche mit mindestens einem der folgenden Merkmale:
a. Die positive Elektrode enthält eine Metallverbindung, die Lithium in Form von Ionen reversibel ein- und auszulagern vermag.
b. Die negative Elektrode enthält eine Kohlenstoffverbindung und/oder ein Metall und/oder Halbmetall, welches mit Lithium legierbar ist.
c. Der Elektrolyt umfasst mindestens ein Lithium-Salz.

9. Verfahren zur Bereitstellung einer sekundären elektrochemische Zelle (100) mit den Merkmalen
a. Die Zelle ist eine Knopfzelle,
b. Die Zelle umfasst eine positive Elektrode (106), die Lithium reversibel ein- und auszulagern vermag,
c. Die Zelle umfasst eine negative Elektrode (105), die Lithium reversibel ein- und auszulagern vermag,
d. Die Zelle umfasst in den Elektroden mobiles Lithium, das für Ein- und Auslagerungsvorgänge in den Elektroden zur Verfügung steht,
e. Die Zelle umfasst einen Elektrolyten, über den das mobile Lithium in Form von Ionen zwischen der positiven und der negativen Elektrode hin- und herwandern kann, und
f. Die Zelle umfasst ein Gehäuse (101, 102), das einen Innenraum einschließt, in dem die Elektroden und der Elektrolyt angeordnet sind,
wobei bei der Herstellung der Zelle
g. im Innenraum des Gehäuses ein Lithium-Depot (112) angeordnet wird, um Lithium-Verluste bei der Formation der Zelle und/oder im Betrieb ausgleichen zu können, und
h. als Lithium-Depot eine Lithium-Legierung aus Lithium und mindestens einem Legierungspartner gewählt wird, **dadurch gekennzeichnet, dass** der Lithium-Anteil der Lithium-Legierung im Bereich von 5 Gew.-% bis 46 Gew.-% liegt.

10. Verfahren nach Anspruch 9, zusätzlich **gekennzeichnet durch** mindestens eines der folgenden Merkmale:
a. Die Zelle wird formiert.
b. Das Lithium in dem Lithium-Depot wird vor oder nach der Formation der Zelle teilweise oder vollständig aktiviert.

11. Batterie, umfassend mindestens eine Zelle nach einem der vorhergehenden Ansprüche 1 bis 8.

## Claims

1. Secondary electrochemical cell (100) having the features
a. the cell comprises a positive electrode (106) which is able to incorporate and release lithium reversibly,
b. the cell comprises a negative electrode (105) which is able to incorporate and release lithium reversibly,
c. the cell comprises, in the electrodes, mobile lithium which is available for incorporation and release processes in the electrodes,
d. the cell comprises an electrolyte via which the mobile lithium can migrate back and forth in the form of ions between the positive and the negative electrode,
e. the cell comprises a housing (101, 102) which encloses an interior space in which the electrodes and the electrolyte are arranged,
f. the cell comprises, in addition to the lithium present in the electrodes, a lithium depot (112) in order to be able to compensate for lithium losses during formation of the cell and/or during operation,
g. the cell is a button cell and
h. the lithium depot is a lithium alloy composed of lithium and at least one alloying partner, **characterized in that** the proportion of lithium in the lithium alloy is in the range from 5% by weight to 46% by weight.

2. Cell according to Claim 1 having at least one of the following features:
a. the lithium depot is arranged between the electrodes and the housing or between one of the electrodes and the housing,
b. the lithium depot is a foil, a film, a gauze or a mesh composed of the lithium alloy,
c. the lithium depot is present in powder form or in the form of filaments,
d. the lithium depot is present as layer.

3. Cell according to Claim 1 or Claim 2 having at least one of the following features:
a. the housing has a positive pole and a negative pole,
b. the positive pole of the housing is in electrical contact with the positive electrode,
c. the negative pole of the housing is in electrical contact with the negative electrode,
e. the lithium depot is electrically connected to the positive pole and/or the positive electrode.

4. Cell according to any of the preceding claims having at least one of the following features:
a. the lithium alloy comprises lithium together with at least one of the metals of the group consisting of aluminium, carbon, silicon, germanium, scandium, yttrium, titanium, zirconium, hafnium, boron, gallium, indium and thallium,
b. the lithium alloy is a lithium-aluminium alloy having a proportion of aluminium in the range from 0.5% by weight to 95% by weight.

5. Cell according to any of the preceding claims, additionally **characterized by** the following feature:
a. the lithium depot has an oxide layer on its surface.

6. Cell according to any of the preceding claims having at least one of the following features:
a. the housing comprises a metallic housing half as positive pole and a metallic housing half as negative pole,
b. the lithium depot is arranged on an inside of the housing half which forms the positive pole and is in direct contact with this.

7. Cell according to any of the preceding claims having at least one of the following features:
a. the housing comprises two circular or oval housing plates which are at a distance from one another and parallel to one another and also a ring-shaped housing wall connecting the housing plates, where the housing wall and each of the housing plates have an inside facing the interior space and an outside facing in an opposite direction,
b. the positive electrode and the negative electrode are present in the form of electrode bands and together with at least one separator band (107, 108) form an electrode-separator composite,
c. the housing contains a stack comprising two or more layers of the electrode-separator composite,
d. the electrode-separator composite is present as spiral, cylindrical roll (104) which is formed by the electrode bands and the at least one separator band and whose end faces are formed by the longitudinal edges of the electrode bands and the at least one separator band,
e. the end faces of the cylindrical roll face in the direction of the mutually parallel housing plates.

8. Cell according to any of the preceding claims having at least one of the following features:
a. the positive electrode contains a metal compound which is able to incorporate and release lithium reversibly in the form of ions,
b. the negative electrode contains a carbon compound and/or a metal and/or a semimetal which is alloyable with lithium,
c. the electrolyte comprises at least one lithium salt.

9. Process for providing a secondary electrochemical cell (100), having the features
a. the cell is a button cell,
b. the cell comprises a positive electrode (106) which is able to incorporate and release lithium reversibly,
c. the cell comprises a negative electrode (105) which is able to incorporate and release lithium reversibly,
d. the cell comprises, in the electrodes, mobile lithium which is available for incorporation and release processes in the electrodes,
e. the cell comprises an electrolyte via which the mobile lithium can migrate back and forth in the form of ions between the positive electrode and the negative electrode and
f. the cell comprises a housing (101, 102) which encloses an interior space in which the electrodes and the electrolyte are arranged,
wherein, in the production of the cell,
g. a lithium depot (112) is arranged in the interior space of the housing in order to be able to compensate for lithium losses during formation of the cell and/or during operation and
h. a lithium alloy composed of lithium and at least one alloying partner is selected as lithium depot, **characterized in that** the proportion of lithium in the lithium alloy is in the range from 5% by weight to 46% by weight.

10. Process according to Claim 9, additionally **characterized by** at least one of the following features:
a. the cell is formed,
b. the lithium in the lithium depot is partially or completely activated before or after formation of the cell.

11. Battery comprising at least one cell according to any of Claims 1 to 8.

## Revendications

1. Pile électrochimique secondaire (100) présentant les caractéristiques
a. la pile comprend une électrode positive (106), qui peut stocker et déstocker du lithium de manière réversible,
b. la pile comprend une électrode négative (105), qui peut stocker et déstocker du lithium de manière réversible,
c. la pile comprend, dans les électrodes, du lithium mobile qui est à disposition pour des processus de stockage et de déstockage dans les électrodes,
d. la pile comprend un électrolyte, via lequel le lithium mobile peut se déplacer sous forme d'ions entre l'électrode positive et l'électrode négative et inversement,
e. la pile comprend un boîtier (101, 102), qui renferme une chambre interne dans laquelle sont disposés les électrodes et l'électrolyte,
f. la pile comprend, en plus du lithium contenu dans les électrodes, un dépôt de lithium (112) pour pouvoir compenser les pertes de lithium lors de la formation de la pile et/ou lors du fonctionnement,
g. la pile est une pile bouton et
h. le dépôt de lithium est un alliage de lithium constitué par du lithium et au moins un partenaire d'alliage, **caractérisée en ce que** la proportion de lithium de l'alliage de lithium se situe dans la plage de 5 à 46% en poids.

2. Pile selon la revendication 1, présentant au moins l'une des caractéristiques suivantes :
a. le dépôt de lithium est disposé entre les électrodes et le boîtier ou entre l'une des électrodes et le boîtier,
b. le dépôt de lithium est une feuille, un film, une toile ou un treillis en alliage de lithium,
c. le dépôt de lithium se trouve sous forme de poudre ou sous forme de filaments,
d. le dépôt de lithium se trouve sous forme de couche.

3. Pile selon la revendication 1 ou la revendication 2, présentant au moins l'une des caractéristiques suivantes :
a. le boîtier présente un pôle positif et un pôle négatif,
b. le pôle positif du boîtier est en contact électrique avec l'électrode positive,
c. le pôle négatif du boîtier est en contact électrique avec l'électrode négative,
e. le dépôt de lithium est raccordé électriquement au pôle positif et/ou à l'électrode positive.

4. Pile selon l'une quelconque des revendications précédentes, présentant au moins l'une des caractéristiques suivantes :
a. l'alliage de lithium comprend, outre le lithium, au moins l'un des métaux du groupe constitué par l'aluminium, le carbone, le silicium, le germanium, le scandium, l'yttrium, le titane, le zirconium, l'hafnium, le bore, le gallium, l'indium et le thallium.
b. l'alliage de lithium est un alliage de lithium-aluminium présentant une proportion d'aluminium dans la plage de 0,5% en poids à 95% en poids.

5. Pile selon l'une quelconque des revendications précédentes, en outre **caractérisée par** la caractéristique suivante :
a. le dépôt de lithium présente une couche d'oxyde sur sa surface.

6. Pile selon l'une quelconque des revendications précédentes, présentant au moins l'une des caractéristiques suivantes :
a. le boîtier comprend une demi-partie de boîtier métallique en tant que pôle positif et une demi-partie de boîtier métallique en tant que pôle négatif,
b. le dépôt de lithium est disposé sur un côté interne de la demi-partie de boîtier qui forme le pôle positif et est en contact direct avec celui-ci.

7. Pile selon l'une quelconque des revendications précédentes, présentant au moins l'une des caractéristiques suivantes :
a. le boîtier comprend deux fonds de boîtier ronds ou ovales, écartés l'un de l'autre et parallèles l'un à l'autre ainsi qu'une enveloppe de boîtier annulaire reliant les fonds de boîtier, l'enveloppe de boîtier et chacun des fonds de boîtier présentant à chaque fois un côté interne orienté vers la chambre interne et un côté externe orienté dans la direction opposée,
b. l'électrode positive et l'électrode négative se trouvent sous forme de bandes d'électrode et forment un composite électrodes-séparateur présentant au moins une bande de séparateur (107, 108),
c. le boîtier contient une pile comprenant deux couches ou plus du composite électrodes-séparateur,
d. le composite électrodes-séparateur se trouve sous forme d'une bobine cylindrique (104) en forme de spirale, formée par les bandes d'électrodes et par ladite au moins une bande de séparateur, les faces frontales de ladite bobine étant formées par les bords longitudinaux des bandes d'électrode et de ladite au moins une bande de séparateur,
e. les faces frontales de la bobine cylindrique sont orientées vers les fonds de boîtier parallèles l'un à l'autre.

8. Pile selon l'une quelconque des revendications précédentes, présentant au moins l'une des caractéristiques suivantes :
a. l'électrode positive contient un composé métallique qui est en mesure de stocker et de déstocker du lithium de manière réversible sous forme d'ions,
b. l'électrode négative contient un composé carboné et/ou un métal et/ou un semi-métal qui peut former un alliage avec du lithium,
c. l'électrolyte comprend au moins un sel de lithium.

9. Procédé pour la préparation d'une pile électrochimique secondaire (100) présentant les caractéristiques
a. la pile est une pile bouton,
b. la pile comprend une électrode positive (106), qui peut stocker et déstocker du lithium de manière réversible,
c. la pile comprend une électrode négative (105), qui peut stocker et déstocker du lithium de manière réversible,
d. la pile comprend, dans les électrodes, du lithium mobile qui est à disposition pour des processus de stockage et de déstockage dans les électrodes,
e. la pile comprend un électrolyte, via lequel le lithium mobile peut se déplacer sous forme d'ions entre l'électrode positive et l'électrode négative et inversement et
f. la pile comprend un boîtier (101, 102), qui renferme une chambre interne dans laquelle sont disposés les électrodes et l'électrolyte,
et lors de la fabrication de la pile
g. un dépôt de lithium (112) étant agencé dans la chambre interne du boîtier pour pouvoir compenser les pertes de lithium lors de la formation de la pile et/ou lors du fonctionnement et
h. un alliage de lithium constitué par du lithium et par au moins un partenaire d'alliage étant choisi comme dépôt de lithium, **caractérisé en ce que** la proportion de lithium de l'alliage de lithium se situe dans la plage de 5 à 46% en poids.

10. Procédé selon la revendication 9, en outre **caractérisé par** au moins l'une des caractéristiques suivantes :
a. la pile est formée,
b. le lithium dans le dépôt de lithium est partiellement ou complètement activé avant ou après la formation de la pile.

11. Batterie, comprenant au moins une pile selon l'une quelconque des revendications précédentes 1 à 8.
